# EUROPEAN PATENT SPECIFICATION

(11) **EP 4 365 984 B1**
(45) Date of publication and mention of the grant of the patent: **05.08.2026**
(21) Application number: 22913568.6
(22) Date of filing: 23.09.2022
(51) Int. Cl.: H01M 4/139, H01M 4/04, H01M 4/80, B23K 26/382, H01M 4/13, H01M 10/04, H01M 10/052, H01M 10/0563, H01M 10/0566, H01M 10/0585

(54) **ELECTRODE PLATE MANUFACTURING APPARATUS AND ELECTRODE PLATE MANUFACTURING METHOD**
ELEKTRODENPLATTENHERSTELLUNGSVORRICHTUNG UND ELEKTRODENPLATTENHERSTELLUNGSVERFAHREN
APPAREIL DE FABRICATION DE PLAQUE D'ÉLECTRODE ET PROCÉDÉ DE FABRICATION DE PLAQUE D'ÉLECTRODE

(30) Priority: 31.12.2021 CN 202111675817
(43) Date of publication of application: 08.05.2024
(73) Proprietor: Contemporary Amperex Technology (Hong Kong) Limited, Central, Central And Western District (HK)
(72) Inventor: LI, Diwu, NINGDE CITY, Fujian 352100 (CN); SHANG, Hongwu, NINGDE CITY, Fujian 352100 (CN); LI, Shisong, NINGDE CITY, Fujian 352100 (CN); CHE, Huan, NINGDE CITY, Fujian 352100 (CN); TANG, Zhenguang, NINGDE CITY, Fujian 352100 (CN); LIAO, Linchen, NINGDE CITY, Fujian 352100 (CN)
(74) Representative: Gong, Jinping
(86) International application number: PCT/CN2022/120956
(87) International publication number: WO 2023/124303

(56) References cited:
- WO-A1-2023/142430
- CN-U- 207 009 551
- CN-U- 207 239 451
- CN-U- 207 888 090
- JP-A- 2009 239 140
- JP-A- 2012 043 884
- JP-A- H 117 961
- JP-A- H 117 961

## Description

### Cross-Reference to Related Application

The present application is based on and claims priority to Chinese patent application No. 202111675817.5 filed on December 31, 2021.

### Technical Field

The present invention relates to an electrode plate manufacturing apparatus according to the preamble of claim 1 and to an electrode plate manufacturing method according to the preamble of claim 7. An example of such an apparatus and of such a method is disclosed by JP 2009 239140 A.

### Background Art

Achieving energy conservation and emission reduction is the key to the sustainable development of the automotive industry. Electric vehicles have become an important part of the sustainable development of the automotive industry due to their advantages in energy conservation and environmental protection. For the electric vehicles, the battery technology is an important factor to their development.

The increase in energy density and compacted density for cell design leads to the difficulty in infiltration of cells in the existing filling process, causing poor infiltration, interfacial dark spots of electrode plates, and the like. Especially for cells with large height, the infiltration process has become a bottleneck in production with poor infiltration for middle parts of cells and long infiltration time, resulting in a serious decrease in production capacity.

### Summary of the Invention

In view of the above problems, embodiments of the present invention provide an electrode plate manufacturing apparatus and an electrode plate manufacturing method as defined in the appended claim set, which allow for rapid infiltration of cells and greatly improve the infiltration efficiency of cells.

The electrode plate manufacturing apparatus defined in claim 1 comprises: a first coating device configured to apply a first active material coating on a first side of a current collector; a perforating device configured to perforate the current collector from a second side of the current collector, the second side being opposite to the first side; and a second coating device configured to apply a second active material coating on the second side of the current collector. The perforating device is located downstream of the first coating device along a travel path of the current collector, and the second coating device is located downstream of the perforating device along the travel path of the current collector.

One side of the current collector is coated by the first coating device first, then the other side of the current collector is perforated by the perforating device, and then the other side of the current collector is coated by the second coating device, so that an electrode plate having an intermediate current collector with through holes is formed. In this way, rapid infiltration of cells is enabled, thus greatly improving the infiltration efficiency of cells, solving the problems of difficulty in infiltration, poor interfacial infiltration, and lithium precipitation dark spots of cells with high compacted density, and improving the performance of the cells.

In some embodiments, the perforating device is configured to perforate the current collector from the second side of the current collector such that a number of through holes are formed in the current collector. A number of through holes are formed in the current collector so that the second active material coating can be in communication with the first active material coating, making infiltration of cells easier, facilitating rapid infiltration of cells, and improving the infiltration efficiency of cells.

The perforating device is configured not to form through holes in the first active material coating when perforating the current collector. No through holes are formed in the first active material coating, so that it is possible to reduce or even eliminate impact on active materials and avoid abnormal electrical properties such as poor K-value and cycle capacity plummeting caused by damage to the active materials. In addition, since the first active material coating has no through holes, when the second coating device applies an active material on the second side of the current collector to form the second active material coating, the applied active material can be readily received by the first active material coating after passing through the through holes, without leakage.

In some embodiments, the second coating device is configured to cause part of the second active material coating to fill the holes formed in the current collector. When the first active material coating and the second active material coating are connected to each other by means of the through holes, it is possible to further facilitate an electrolyte passing through the through holes to rapidly infiltrate an electrode plate during cell infiltration, shorten the infiltration time, and improve the infiltration efficiency.

In some embodiments, the perforating device comprises a plurality of perforating units arranged at intervals in a vertical direction, and the plurality of perforating units are configured to perforate different positions of the current collector. The current collector is perforated while the current collector travels in the vertical direction, so that the influence of the gravity of the current collector on a perforating operation can be avoided to the greatest extent, thereby improving perforation accuracy and avoiding perforation failure.

In some embodiments, the plurality of perforating units are staggered in the vertical direction. By selecting the number and different locations of the perforating units, a desired perforation array can be realized according to the requirements of a perforating process solution.

In some embodiments, the electrode plate manufacturing apparatus further comprises a supporting member, and the supporting member is configured to support the current collector when the perforating device perforates the current collector. The supporting effect of the supporting member on the current collector can reduce shaking of the current collector and further improve the perforation accuracy.

A detection unit is arranged between the perforating device and the second coating device along the travel path of the current collector, and the detection unit is configured to detect the holes formed in the current collector. The detection unit makes it possible to clearly understand whether the holes formed in the current collector meet the requirements, and accordingly provides a basic guarantee for mass production of electrode plates.

The electrode plate manufacturing method defined in claim 7 comprises the following steps: causing a current collector to travel along a travel path; applying a first active material coating on a first side of the current collector by a first coating device; perforating the current collector from a second side of the current collector by a perforating device, the second side being opposite to the first side; and applying a second active material coating on the second side of the current collector by a second coating device. The perforating device is located downstream of the first coating device along a travel path of the current collector, and the second coating device is located downstream of the perforating device along the travel path of the current collector.

One side of the current collector is coated by the first coating device first, then the other side of the current collector is perforated by the perforating device, and then the other side of the current collector is coated by the second coating device, so that an electrode plate having an intermediate current collector with through holes is formed. In this way, rapid infiltration of cells is enabled, thus greatly improving the infiltration efficiency of cells, solving the problems of difficulty in infiltration, poor interfacial infiltration, and lithium precipitation dark spots of cells with high compacted density, and improving the performance of the cells.

In some embodiments, a number of through holes are formed in the current collector when the current collector is perforated from the second side of the current collector. A number of through holes are formed in the current collector so that the second active material coating can be in communication with the first active material coating, making infiltration of cells easier, facilitating rapid infiltration of cells, and improving the infiltration efficiency of cells.

No through holes are formed in the first active material coating during perforation of the current collector. No through holes are formed in the first active material coating, so that it is possible to reduce or even eliminate impact on active materials and avoid abnormal electrical properties such as poor K-value and cycle capacity plummeting caused by damage to the active materials. In addition, since the first active material coating has no through holes, when the second coating device applies an active material on the second side of the current collector to form the second active material coating, the applied active material can be readily received by the first active material coating after passing through the through holes, without leakage.

In some embodiments, when the second active material coating is applied by the second coating device, the holes formed in the current collector are filled with the second active material coating. When the first active material coating and the second active material coating are connected to each other by means of the through holes, it is possible to further facilitate an electrolyte passing through the through holes to rapidly infiltrate an electrode plate during cell infiltration, shorten the infiltration time, and improve the infiltration efficiency.

In some embodiments, the perforating device comprises a plurality of perforating units arranged at intervals in a vertical direction, and the method further comprises perforating different positions of the current collector by the plurality of perforating units. By selecting the number and different locations of the perforating units, a desired perforation array can be realized according to the requirements of a perforating process solution.

In some embodiments, the first coating device, the perforating device and the second coating device are operated synchronously.

The method further comprises detecting the holes formed in the current collector by a detection unit arranged between the perforating device and the second coating device along the travel path of the current collector. The detection unit makes it possible to clearly understand whether the holes formed in the current collector meet the requirements, and accordingly provides a basic guarantee for mass production of electrode plates.

The present application further describes a non-claimed electrode plate, which is manufactured using an electrode plate manufacturing apparatus described above, or is manufactured by an electrode plate manufacturing method described above. A current collector of the electrode plate is provided with holes, a first side of the current collector is coated with a first active material coating, a second side of the current collector is coated with a second active material coating, the first side is opposite to the second side, and the first active material coating and the second active material coating fill and close the holes formed in the current collector.

The present application further describes a non-claimed battery comprising an electrode plate described above.

The present application further describes a non-claimed power consuming device, comprising a battery described above. The battery is configured to supply electric energy.

The above description is only an overview of the technical solutions of the present application. In order to more clearly understand the technical means of the present application to implement same according to the contents of the description, and in order to make the above and other objectives, features and advantages of the present application more obvious and understandable, specific implementations of the present application are exemplarily described below.

### Brief Description of the Drawings

Various other advantages and benefits will become obvious to those of ordinary skill in the art upon reading the following detailed description of preferred implementations. Accompanying drawings are merely for the purpose of illustrating the preferred implementations and are not to be construed as limiting the present application. Moreover, like components are denoted by like reference numerals throughout the accompanying drawings. In the accompanying drawings:
FIG. 1 is a perspective view of an electrode plate manufacturing apparatus according to some embodiments of the present application.
FIG. 2 is a front view of an electrode plate manufacturing apparatus according to some embodiments of the present application.
FIG. 3 is a perspective view of an electrode plate manufacturing apparatus according to some embodiments of the present application viewed from another angle.
FIG. 4 illustrates an electrode plate manufacturing process according to some embodiments of the present application.
FIG. 5 illustrates an electrode plate manufacturing process according to some embodiments of the present application.
FIG. 6 illustrates an electrode plate manufacturing process according to some embodiments of the present application.
FIG. 7 is a flowchart of an electrode plate manufacturing method according to some embodiments of the present application.
FIG. 8 is a flowchart of an electrode plate manufacturing method according to some embodiments of the present application.

Reference signs in Detailed Description of Embodiments:
1: electrode plate manufacturing apparatus;
10: current collector; 11: current collector winding device; 12: electrode plate; 13: electrode plate winding device; 18: through hole;
110: first side; 120: first active material coating; 130: second side; 140: second active material coating;
20: first coating device;
30: perforating device;
320: perforating unit; 340: perforating unit; 360: supporting member; 380: detection unit;
40: second coating device;
50: drying device;
520: first drying device; 540: second drying device.

### Detailed Description of Embodiments

Embodiments of the technical solutions of the present application will be described in detail below with reference to the accompanying drawings. The following embodiments are merely intended to more clearly illustrate the technical solutions of the present application, so they merely serve as examples, but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features. In the description of the embodiments of the present application, the phrase "a plurality of" means two or more, unless otherwise explicitly and specifically defined.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "and/or" is merely intended to describe the associated relationship of associated objects, indicating that three relationships can exist, for example, A and/or B can include: only A exists, both A and B exist, and only B exists. In addition, the character "/" herein generally indicates an "or" relationship between the associated objects.

In the description of the embodiments of the present application, the term "a plurality of" means two or more (including two), similarly the term "a plurality of groups" means two or more groups (including two groups), and the term "a plurality of pieces" means two or more pieces (including two pieces).

In the description of the embodiments of the present application, the orientation or position relationship indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential", etc. are based on the orientation or position relationship shown in the accompanying drawings and are merely intended to facilitate and simplify the description of the embodiments of the present application, rather than indicating or implying that the apparatus or element considered must have a particular orientation or be constructed and operated in a particular orientation, and therefore not to be construed as limiting the embodiments of the present application.

In the description of the embodiments of the present application, unless otherwise explicitly specified and defined, the technical terms such as "mounting", "connecting", "connection", "fixing", etc. should be understood in a broad sense, for example, they may be a fixed connection, a detachable connection, or an integrated connection; may be a mechanical connection or an electric connection; and may be a direct connection or an indirect connection by means of an intermediate medium, or may be internal communication between two elements or interaction between the two elements. For those of ordinary skill in the art, the specific meanings of the above terms in the embodiments of the present application can be understood according to specific situations.

At present, from the perspective of the development of the market situation, traction batteries are used more and more widely. The traction batteries are not only used in energy storage power systems such as hydroelectric power plants, thermal power plants, wind power plants and solar power plants, but also widely used in electric transportation means such as electric bicycles, electric motorcycles, and electric vehicles and in many fields such as military equipment and aerospace. With the continuous expansion of the application field of traction batteries, market demand for the traction batteries is also expanding.

Compacted density has a large impact on battery performance during manufacturing of batteries. Generally speaking, the compacted density has a close relationship with the specific capacity, the efficiency and the internal resistance of the electrode plate, and the cycling performance of the battery. Finding the optimal compacted density is very important for battery design. Generally speaking, within an allowable compaction range of a material, the higher the compacted density of an electrode plate, the higher the capacity of a battery can be made, so the compacted density is also regarded as one of reference indexes of energy density of the material.

However, if the electrode plate is over-compacted, the degree of compression between material particles is too large, resulting in a low porosity of the electrode plate and a reduction in the amount of electrolyte absorbed by the electrode plate, so that it is difficult for the electrolyte to penetrate into the electrode plate, directly leading to poor performance of the specific capacity of the material. Batteries with poor liquid retention capacity will be polarized greatly during cycling and decay quickly, with internal resistance increased significantly. Porosity of an electrode plate refers to a percentage of volume of internal pores of the rolled electrode plate to a total volume of the rolled electrode plate. Too low a porosity of the electrode plate will reduce an infiltration rate of the electrolyte to the electrode plate, affecting the battery performance, while too high a porosity will reduce the energy density of the battery, wasting the effective space.

The inventors have noticed that the increase in energy density and compacted density for cell design leads to the difficulty in infiltration of cells in the existing filling process, causing poor infiltration, interfacial dark spots of electrode plates, and the like. Especially for cells with large height, the infiltration process has become a bottleneck in production with poor infiltration for middle parts of cells and long infiltration time, resulting in a serious decrease in production capacity.

In order to alleviate the problem of poor infiltration, the applicant has found through research that the electrode plate manufacturing process can be changed to solve the problems of difficulty in infiltration, poor interfacial infiltration, and lithium precipitation dark spots of cells with high compacted density, and improve the performance of the cells.

Based on the above considerations, one side of the electrode plate is coated and perforated, and then the other side of the electrode plate is coated, so that an electrode plate having an intermediate substrate with through holes and two sides coated with closed active materials is formed. Such an electrode plate enables rapid infiltration of cells and greatly improves the infiltration efficiency of the cells.

A battery cell composed of the electrode plate manufactured using the electrode plate manufacturing apparatus and by the electrode plate manufacturing method of the present application may be used in, but is not limited to, a power consuming device, such as a vehicle, a ship, or an aircraft. A power supply system provided with the power consuming device composed of a battery cell, a battery and the like disclosed in the present application may be used.

The embodiments of the present application provide a power consuming device using a battery as a power supply. The power consuming device may be, but is not limited to, a cell phone, a tablet, a laptop, an electric toy, an electric tool, an electric scooter, an electric vehicle, a ship, a spacecraft, etc. The electric toy may include a stationary or mobile electric toy, such as a game console, an electric vehicle toy, an electric ship toy, and an electric airplane toy. The spacecraft may include an airplane, a rocket, a space shuttle, a spaceship, etc.

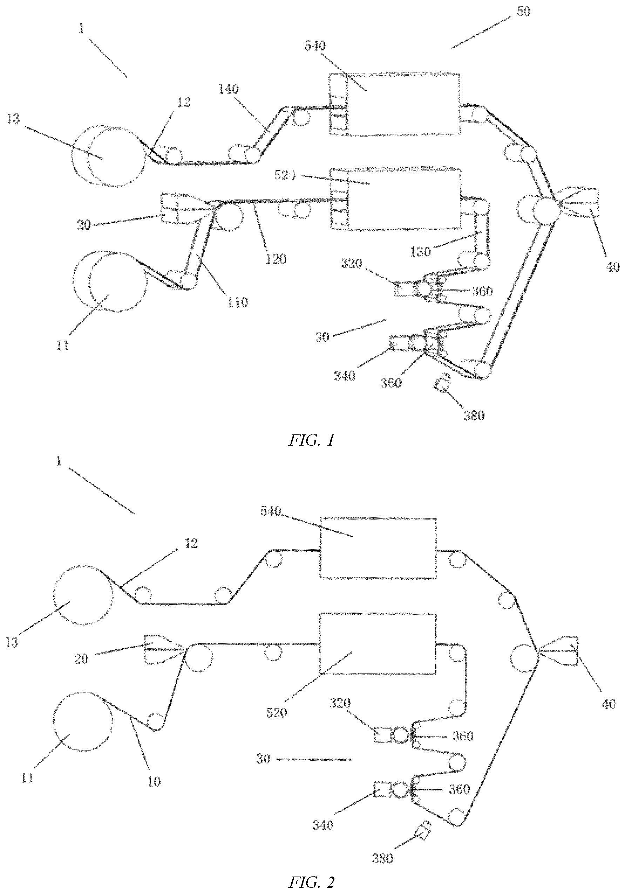

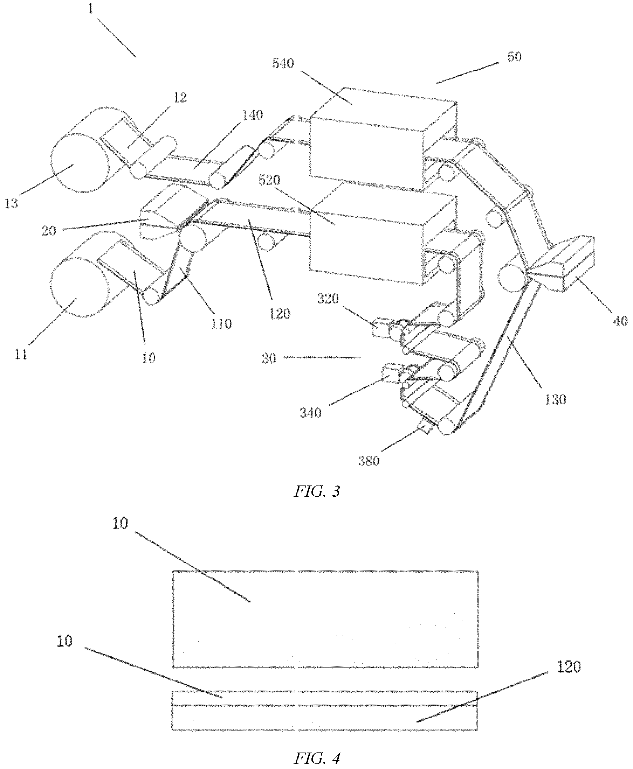

According to some embodiments of the present application, with reference to FIG. 1, and with further reference to FIGS. 2 to 3, FIG. 1 is a schematic diagram of an electrode plate manufacturing apparatus according to some embodiments of the present application, FIG. 2 is a front view of an electrode plate manufacturing apparatus according to some embodiments of the present application, and FIG. 3 is a schematic diagram of an electrode plate manufacturing apparatus according to some embodiments of the present application viewed from another angle.

The present application provides an electrode plate manufacturing apparatus 1 for manufacturing an electrode plate 12 from a current collector 10. The electrode plate manufacturing apparatus 1 according to the present application comprises a perforating device and at least two coating devices. The perforating device is used to perforate the current collector 10, and the coating devices are used to apply active materials on the current collector 10.

The electrode plate manufacturing apparatus 1 comprises a first coating device 20, a perforating device 30 and a second coating device 40. The first coating device 20 is configured to apply an active material on a first side 110 of the current collector 10 to form a first active material coating 120. After the first active material coating 120 is applied, the perforating device 30 is configured to perforate the current collector 10. Preferably, the perforating device 30 perforates the current collector from a second side 130 of the current collector 10 that is opposite to the first side 110. After perforating, the second coating device 40 is configured to apply an active material on the second side 130 of the current collector 10 to form a second active material coating 140.

The current collector 10 typically comes from a current collector winding device 11 and the manufactured electrode plate 12 is received by an electrode plate winding device 13. The current collector 10 travels from the current collector winding device 11 through the electrode plate manufacturing apparatus 1 to form the electrode plate 12 that is eventually received the electrode plate winding apparatus 13. That is, the current collector 10 has a travel path from the current collector winding device 11 to the electrode plate winding device 13 through the electrode plate manufacturing device 1. On the travel path of the current collector 10, a number of rollers are arranged, comprising a conveyor roller, a tensioning roller, and the like. This is a conventional technical means in the art, and thus will not be repeated herein.

The perforating device 30 is located downstream of the first coating device 20 along the travel path of the current collector 10, and the second coating device 40 is located downstream of the perforating device 30 along the travel path of the current collector 10. That is, for the current collector 10 in the electrode plate manufacturing apparatus 1, one side of the current collector 10 is coated by the first coating device 20 first, then the other side of the current collector 10 is perforated by the perforating device 30, and then the other side of the current collector 10 is coated by the second coating device 40.

The current collector is a structure or part that collects electric current, which not only functions to carry active materials, but also collects electrons generated by electrochemical reactions and conducts them to an external circuit, so as to realize a process of converting chemical energy into electric energy. At present, for those commonly used in the cell production, for example, a positive electrode aluminum-foil current collector may have a thickness of 10-20 µm and a negative electrode copper-foil current collector may have a thickness of 6-8 µm. The aluminum foil is mainly a rolled aluminum foil and the copper foil is mainly an electrolytic copper foil.

The active materials usually include positive and negative electrode materials. For example, the positive electrode material includes lithium nickelate, lithium manganate, a ternary material, lithium cobaltate, lithium ferrous phosphate, and the like, while the negative electrode material generally includes an amorphous carbon material, a graphitized carbon material, a silicon-based material, a nitride, a new alloy, and the like.

Both the current collector and the active materials can employ conventional technical means in the field. The above descriptions of the current collector and the active materials are merely exemplary rather than restrictive.

The first coating device 20 and the second coating device 40 may be conventional coating devices in the art, and the coating of the current collector 10 may also employ conventional coating techniques in the art. For example, as shown in FIGS. 1-3, both the first coating device 20 and the second coating device 40 may implement coating at or near the tensioning roller.

The perforating device 30 may likewise employ a conventional perforating device in the art, such as a laser.

The above descriptions of the coating devices and the perforating device are also exemplary rather than restrictive. It can be understood by those skilled in the art that any other suitable coating device and perforating device can be employed for the solutions of the present application.

As shown in FIGS. 4-6, one side is coated by the first coating device 20, then perforating is carried out by the perforating device 30, and then the other side is coated by the second coating device 40, so that an electrode plate having an intermediate current collector with through holes is formed. In this way, rapid infiltration of cells is enabled, thus greatly improving the infiltration efficiency of cells, solving the problems of difficulty in infiltration, poor interfacial infiltration, and lithium precipitation dark spots of cells with high compacted density, and improving the performance of the cells.

As mentioned above, since the process of manufacturing the electrode plate 12 from the current collector 10 is a continuous process without interruption, the operation is simpler, the cost is lower, and the perforating efficiency can be matched with the coating speed to meet the requirements for mass production.

The perforating according to the present application is only for the intermediate current collector, does not damage the active materials of the electrode plate and avoids abnormal electric properties such as poor K-value and cycle capacity plummeting caused by damage to the active materials.

The perforating is performed only for the intermediate current collector, and there is no need to perforate a tab region, thereby avoiding the problem of breakage in cold pressing caused by perforating the tab region.

According to some embodiments of the present application, optionally, as shown in FIGS. 4-6, when perforating the current collector 10, the perforating device 30 may perforate from the second side 130 of the current collector 10 to form a number of through holes 18 in the current collector 10.

The second side 130 is a side opposite to the first side 110. When the first side 110 of the current collector 10 is coated with the first active material coating 120, perforating from the second side 130 is performed without damaging the first active material coating 120 that has been coated, or at least reducing damage to the first active material coating 120.

A number of through holes 18 are formed in the current collector 10 so that the second active material coating 140 can be in communication with the first active material coating 120, as shown in FIGS. 4-6, making infiltration of cells easier, facilitates rapid infiltration of cells, and improving the infiltration efficiency of cells.

When perforating the current collector 10, the perforating device 30 may form through holes 18 in the current collector 10, but not in the first active material coating 120.

For example, the perforating device 30 may form the through holes 18 in the current collector 10 without affecting the first active material coating 120 so that the depth of the through holes 18 is the thickness of the current collector 10, for example, 3-17 µm.

It is ensured that the through holes 18 are formed in the current collector 10, but no through holes are formed in the first active material coating 120. In this case, the depth of the through holes 18 is the thickness of the current collector 10 plus the depth of holes correspondingly formed in the first active material coating 120.

No through holes are formed in the first active material coating 120, so that it is possible to reduce or even eliminate impact on active materials and avoid abnormal electrical properties such as poor K-value and cycle capacity plummeting caused by damage to the active materials. In addition, since the first active material coating 120 has no through holes, when the second coating device 40 applies an active material on the second side 130 of the current collector 10 to form the second active material coating 140, the applied active material can be readily received by the first active material coating 120 after passing through the through holes 18, without leakage.

According to some embodiments of the present application, optionally, the second coating device 40 may be configured to enable the active material to enter the holes formed, by the perforating device 30, in the current collector 10 when coating the current collector 10, that is, to enable part of the second active material coating 140 to enter the holes formed in the current collector 10.

When the perforating device 30 forms the through holes 18 in the current collector 10, as shown in FIGS. 4-6, the active material can pass through the through holes 18 and come into contact with the first active material coating 120 as the current collector 10 is coated by the second coating device 40, such that the first active material coating 120 and the second active material coating 140 are connected to each other by means of the through holes 18. Preferably, the through holes 18 may be completely filled with the active material without voids.

When the first active material coating 120 and the second active material coating 140 are connected to each other by means of the through holes 18, it is possible to further facilitate an electrolyte passing through the through holes to rapidly infiltrate an electrode plate during cell infiltration, shorten the infiltration time, and improve the infiltration efficiency.

According to some embodiments of the present application, optionally, the perforating device 30 comprises a plurality of perforating units 320, 340 arranged at intervals in a vertical direction, and the plurality of perforating units are configured to perforate different positions of the current collector. In the illustrated embodiment, only two perforating units are shown exemplarily for the sake of simplicity, but those skilled in the art can understand that the number of perforating units can be set according to the requirements of actual applications.

After the first side 110 of the current collector 10 is coated by the first coating device 20, a travel direction of the current collector 10 may be changed by the rollers such that the current collector 10 travels in the vertical direction, as shown in FIGS. 1-3.

The current collector 10 is perforated while the current collector 10 travels in the vertical direction, so that the influence of the gravity of the current collector 10 on a perforating operation can be avoided to the greatest extent, thereby improving perforation accuracy and avoiding perforation failure. In an actual operation, there are some safety hazards for a laser perforating apparatus to emit light in an up and down direction for perforating. When the current collector 10 moves in the vertical direction, the laser perforating apparatus emits light in a horizontal direction to avoid the safety problems.

The arrangement of a plurality of perforating units can improve the perforating efficiency, and the positioning and orientation of the perforating units themselves can also contribute to the perforation accuracy to a certain extent.

According to some embodiments of the present application, optionally, the perforating units 320, 340 may be staggered in the vertical direction.

As shown in FIGS. 1-3, the perforating unit 320 is located above the perforating unit 340 in the vertical direction, but is not directly above the perforating unit 340, instead, is staggered to the left and right relative to the vertical direction. In this way, the plurality of perforating units 320, 340 may form a perforation array on the current collector when the current collector 10 travels in its travel direction.

By selecting the number and different locations of the perforating units, a desired perforation array can be realized according to the requirements of a perforating process solution. For example, in an embodiment, four perforating units may be employed to allow for four rows of perforations on the current collector 10, with a spacing of 50 mm between the rows of holes. In each row, the perforation spacing of the perforating unit is 1 mm. The perforation array formed in this way is four rows of holes with a row spacing of 50 mm and a hole spacing of 1 mm in each row. Of course, the above embodiment is only an example, and it can be understood by those skilled in the art that any suitable perforation array that meets the requirements of the actual perforating process is possible.

With the selection of the perforating units, a desired perforation array is realized, the problem of coating leakage after perforating can be avoided, and manufacturability of mass production can be achieved.

As shown in FIGS. 1-3, after the travel direction of the current collector 10 is changed such that the current collector 10 travels in the vertical direction, the current collector 10 may be further tensioned by means of the tensioning rollers. The perforating units 320, 340 may be arranged between two tensioning rollers to perforate the tensioned current collector 10 to ensure the perforation accuracy. In the illustrated embodiment, the perforating unit 320 is arranged between two tensioning rollers, the perforating unit 340 is arranged downstream between two further tensioning rollers, and the perforating unit 320 and the perforating unit 340 run independently of each other to reduce interference with each other.

According to some embodiments of the present application, optionally, the electrode plate manufacturing apparatus 1 may further comprise a supporting member 360, and the supporting member 360 is configured to support he current collector 10 when the perforating device 30 perforates the current collector 10.

In some cases, for example, when the perforation diameter is relatively small or when the current collector is not punched through and the laser power and pulse width need to be increased, or when the power and pulse width need to be reduced or the focal length of a lens needs to be increased to weaken the spot energy in case of perforation of a light-transmitting through hole, perforating the current collector 10 in an overhanging position between two passing rollers may cause severe shaking of the current collector. Therefore, in order to solve the problem of shaking in the perforating process, perforating can be performed at the back of the passing rollers when the electrode plate passes over the rollers so as to minimize the shaking of the current collector, and a supporting member may also be provided to stabilize the current collector.

According to some embodiments, the supporting member 360 may be in the form of a clamp plate made of transparent glass, and laser light emitted from the perforating device 30 may penetrate the clamp plate to reach the current collector 10. The distance between the clamp plate and a surface of the current collector may be set as required, for example it may be less than or equal to 1 mm.

The supporting effect of the supporting member 360 on the current collector 10 can further improve the perforation accuracy.

A detection unit 380 is arranged downstream of the perforating device 30, for example between the perforating device 30 and the second coating device 40, along the travel path of the current collector 10. In this way, the holes formed in the current collector 10 can be detected after the perforating device 30 perforates the current collector 10.

The detection unit 380 may be a charge-coupled device (CCD) detection device for detecting the hole diameter and depth of the holes, the presence or absence of a blind hole, and the like, to determine whether the formed hole meets the requirements.

The detection unit 380 makes it possible to clearly understand whether the holes formed in the current collector 10 meet the requirements, and accordingly provides a basic guarantee for mass production of electrode plates.

According to some embodiments of the present application, as shown in FIGS. 1-3, the electrode plate manufacturing apparatus 1 may further be provided with a drying device 50 for drying the current collector 10 coated with the active materials. The drying device 50 may be a conventional drying device in the art, such as an oven, which may be selected according to requirements.

As shown in FIGS. 1-3, the drying device 50 may comprise a first drying device 520 and a second drying device 540. The first drying device 520 may be arranged downstream of the first coating device 20 in the travel direction of the current collector 10, such that after the first coating device 20 applies the first active material coating 120 on the first side 110 of the current collector 10, the first drying device 520 can be used to dry the first active material coating 120. Preferably, the first drying device 520 may be arranged between the first coating device 20 and the perforating device 30, such that the current collector 10 coated with the first active material coating 120 is dried and then is perforated by the perforating device 30 from the second side 130 of the current collector fluid 10.

The second drying device 540 may be arranged downstream of the second coating device 40 in the travel direction of the current collector 10, such that after the second coating device 40 applies the second active material coating 140 on the second side 130 of the current collector 10, the second drying device 540 can be used to dry the second active material coating 140. In addition, when drying the second active material coating 140, the second drying device 540 may perform a further drying operation on the first active material coating 120 simultaneously. After the current collector 10 coated with the first active material coating 120 and the second active material coating 140 is dried by the second drying device 540, the electrode plate 12 is formed, and the electrode plate 12 is then received by the electrode plate winding device 13.

After the single-sided coating, drying, perforating, double-sided coating, and drying described above, the formed electrode plate 12 may be cold pressed such that the perforated region is compacted.

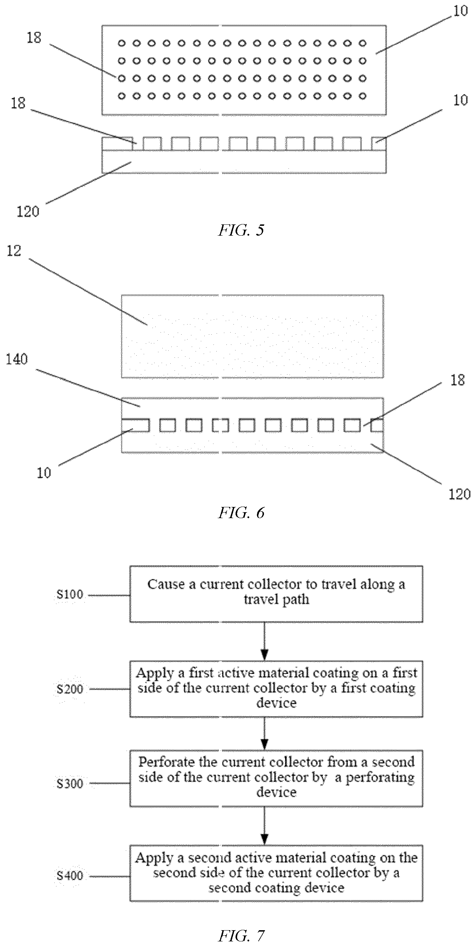

According to some embodiments of the present application, further provided is an electrode plate manufacturing method. Reference is made to FIG. 7, which illustrates a flowchart of an electrode plate manufacturing method according to some embodiments of the present application.

The electrode plate manufacturing method according to the present application comprises a travel step S100 in which a current collector 10 travels along a travel path from a current collector winding device 11. The travel path is a travel path of the current collector 10 as described above.

When the current collector 10 travels along the travel path, a first coating step S200 of the electrode plate manufacturing method according to the present application may be performed, in which a first coating device 20 is used to apply an active material on a first side 110 of the current collector 10 to form a first active material coating 120.

After the first coating step S200 is completed, a perforating step S300 of the electrode plate manufacturing method according to the present application may be performed, in which a perforating device 30 is used to perforate from a second side 130 of the current collector 10 that is opposite to the first side 110.

After the perforating step S300 is completed, a second coating step S400 of the electrode plate manufacturing method according to the present application may be performed, in which a second coating device 40 applies an active material on the second side 130 of the current collector 10 to form a second active material coating 140.

As described above, the perforating device 30 is located downstream of the first coating device 20 along the travel path of the current collector 10, and the second coating device 40 is located downstream of the perforating device 30 along the travel path of the current collector 10. That is, in the electrode plate manufacturing apparatus 1, one side of the current collector 10 is coated by the first coating device 20 first, that is, the first coating step S200 is performed, then perforating is carried out by the perforating device 30, that is, the perforating step S300 is performed, and then the other side is coated by the second coating device 40, that is, the second coating step S400 is performed.

As shown in FIGS. 4-6, the first coating step S200 is performed first, followed by the perforating step S300, and then the second coating step S400, so that an electrode plate having an intermediate current collector with through holes is formed. In this way, rapid infiltration of cells is enabled, thus greatly improving the infiltration efficiency of cells, solving the problems of difficulty in infiltration, poor interfacial infiltration, and lithium precipitation dark spots of cells with high compacted density, and improving the performance of the cells.

As mentioned above, since the process of coating and perforating is a continuous process without interruption, the operation is simpler, the cost is lower, and the perforation efficiency can be matched with the coating speed to meet the requirements for mass production.

The perforating according to the present application is only for the intermediate current collector, does not damage the active materials of the electrode plate and avoids abnormal electric properties such as poor K-value and cycle capacity plummeting caused by damage to the active materials.

The perforating is performed only for the intermediate current collector, and there is no need to perforate a tab region, thereby avoiding the problem of breakage in cold pressing caused by perforating the tab region.

According to some embodiments of the present application, optionally, in the perforating step S300, perforating may be performed from the second side 130 of the current collector 10 to form a number of through holes 18 in the current collector 10.

Since the first side 110 of the current collector 10 is coated with the first active material coating 120, perforating from the second side 130 can be performed without damaging the first active material coating 120 that has been coated, or at least reducing damage to the first active material coating 120.

A number of through holes 18 are formed in the current collector 10 so that the second active material coating 140 can be in communication with the first active material coating 120, as shown in FIGS. 4-6, making infiltration of cells easier, facilitates rapid infiltration of cells, and improving the infiltration efficiency of cells.

When perforating the current collector 10, the perforating device 30 forms through holes 18 in the current collector 10, but not in the first active material coating 120.

It is ensured that the through holes 18 are formed in the current collector 10, but no through holes are formed in the first active material coating 120. In this case, the depth of the through holes 18 is the thickness of the current collector 10 plus the depth of holes correspondingly formed in the first active material coating 120.

No through holes are formed in the first active material coating 120, so that it is possible to reduce or even eliminate impact on active materials and avoid abnormal electrical properties such as poor K-value and cycle capacity plummeting caused by damage to the active materials. In addition, since the first active material coating 120 has no through holes, when the second coating device 40 applies an active material on the second side 130 of the current collector 10 to form the second active material coating 140, the applied active material can be readily received by the first active material coating 120 after passing through the through holes 18, without leakage.

According to some embodiments of the present application, optionally, in the second coating step S400, the active material may enter the holes formed, by the perforating device 30, in the current collector 10, that is, part of the second active material coating 140 enters the holes formed in the current collector 10.

When the perforating device 30 forms the through holes 18 in the current collector 10, as shown in FIGS. 4-6, the active material can pass through the through holes 18 and come into contact with the first active material coating 120 as the current collector 10 is coated by the second coating device 40, such that the first active material coating 120 and the second active material coating 140 are connected to each other by means of the through holes 18. Preferably, the through holes 18 may be completely filled with the active material without voids.

When the first active material coating 120 and the second active material coating 140 are connected to each other by means of the through holes 18, it is possible to further facilitate an electrolyte passing through the through holes to rapidly infiltrate an electrode plate during cell infiltration, shorten the infiltration time, and improve the infiltration efficiency.

According to some embodiments of the present application, optionally, in the perforating step S300, different positions of the current collector can be perforated by the plurality of perforating units 320, 340 of the perforating device 30. The perforating units 320, 340 may be staggered in the vertical direction to achieve a desired perforation array according to the requirements of the perforating process solution.

According to some embodiments of the present application, optionally, the first coating device 20, the perforating device 30, and the second coating device 40 may be operated synchronously.

When the current collector 10 travels along the travel path, the first coating device 20, the perforating device 30, and the second coating device 40 may be operated simultaneously, creating a linked operation of the three. In the case of a malfunction or abnormality of one or more of the devices, the remaining devices may stop operating synchronously.

The first coating step S200 is performed first, followed by the perforating step S300 and the second coating step S400. This is for the same region of the current collector, i.e., for a certain region of the current collector, on which coating, perforating, and coating are performed in sequence. The first coating device 20, the perforating device 30, and the second coating device 40 are operated synchronously, with respect to the entire travel path of the current collector, and the objects to be operated synchronously thereby are not the same region on the current collector.

After the perforating step S300, the holes formed in the current collector 10 are detected by the detection unit 380.

As described above, the detection unit 380 is arranged along the travel path of the current collector 10, and may be arranged downstream of the perforating device 30, for example between the perforating device 30 and the second coating device 40. The detection unit 380 may be a charge-coupled device (CCD) detection device for detecting the hole diameter and depth of the holes, the presence or absence of a blind hole, and the like, to determine whether the formed hole meets the requirements.

The detection unit 380 makes it possible to clearly understand whether the holes formed in the current collector 10 meet the requirements, and accordingly provides a basic guarantee for mass production of electrode plates.

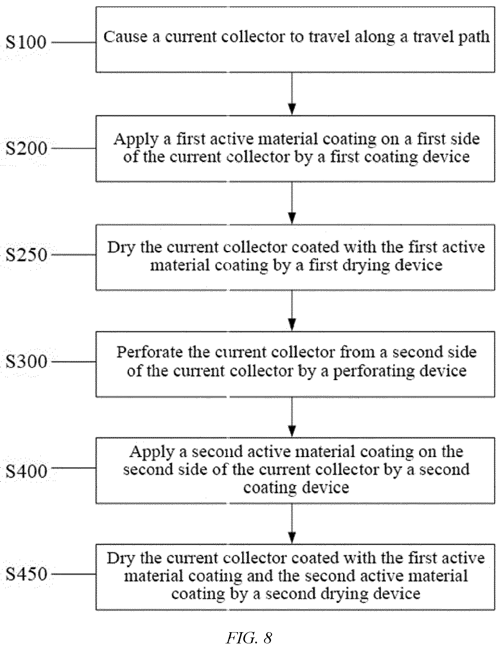

According to some embodiments of the present application, reference is made to FIG. 8, which illustrates a flowchart of an electrode plate manufacturing method. Optionally, after the first coating step S200 and before the perforating step S300, a first drying step S250 may be performed. After the first coating device 20 applies the first active material coating 120 on the first side 110 of the current collector 10, the current collector 10 coated with the first active material coating 120 is dried by the first drying device 520.

According to some embodiments of the present application, optionally, after the perforating step S300 and before the second coating step S400, a second drying step S450 may be performed. After the second coating device 40 applies the second active material coating 140 on the second side 130 of the current collector 10, the current collector 10 coated with the first active material coating 120 and the second active material coating 140 is dried by the second drying device 540.

After the single-sided coating, drying, perforating, double-sided coating, and drying described above, the formed electrode plate 12 may be cold pressed such that the perforated region is compacted. After compaction, the tensile strength of the electrode plate is not significantly different from that of an unperforated electrode plate, and the elongation will decrease, but the elongation of the perforated electrode plate is greater than 1.5% for an anode electrode plate and greater than 1.0% for a cathode electrode plate, so that the problem of breakage does not occur under the current compacted density of PD 1.7 g/cc.

According to some embodiments of the present application, the present application further provides an electrode plate 12 which is manufactured using the electrode plate manufacturing apparatus described above, or is manufactured by the electrode plate manufacturing method. A current collector 10 of the electrode plate 12 is provided with holes, a first side 110 of the current collector 10 is coated with a first active material coating 120, a second side 130 of the current collector 10 is coated with a second active material coating 140, the first side 110 is opposite to the second side 130, and the first active material coating 120 and the second active material coating 140 fill and close the holes formed in the current collector 10.

It is possible to provide a battery, which comprises an electrode plate described in any one of the above solutions.

It is possible to provide a power consuming device, which comprises a battery described in any one of the above solutions, the battery being configured to supply electric energy to the power consuming device.

The power consuming device may be any one of the above apparatuses or systems using the battery.

Finally, it should be noted that the above examples are merely used for illustrating rather than limiting the technical solutions of the present application. Although the present application has been illustrated in detail with reference to the foregoing examples, it should be understood by those of ordinary skill in the art that the technical solutions described in the foregoing examples may still be modified, or some or all of the technical features thereof may be equivalently substituted; and such modifications or substitutions do not make the essence of the corresponding technical solution depart from the scope of the technical solutions of the examples of the present application, insofar as these fall within the scope of the claims. In particular, the technical features mentioned in the examples can be combined in any manner, provided that there is no structural conflict. The present application is not limited to the specific examples disclosed herein but includes all the technical solutions that fall within the scope of the claims.

## Claims

1. An electrode plate manufacturing apparatus (1), comprising:
a first coating device (20) configured to apply a first active material coating (120) on a first side (110) of a current collector (10);
a perforating device (30) configured to perforate the current collector (10) from a second side (130) of the current collector (10), the second side (130) being opposite to the first side (110); and
a second coating device (40) configured to apply a second active material coating (140) on the second side (130) of the current collector (10),
wherein the perforating device (30) is located downstream of the first coating device (20) along a travel path of the current collector (10), and the second coating device (40) is located downstream of the perforating device (30) along the travel path of the current collector (10),
wherein the perforating device (30) is configured not to form through holes in the first active material coating (120) when perforating the current collector (10),
**characterised in that**
a detection unit (380) is arranged between the perforating device (30) and the second coating device (40) along the travel path of the current collector (10), and the detection unit (380) is configured to detect the holes formed in the current collector (10).

2. The electrode plate manufacturing apparatus (1) according to claim 1, wherein the perforating device (30) is configured to perforate the current collector (10) from the second side (130) of the current collector (10) such that a number of through holes (18) are formed in the current collector (10).

3. The electrode plate manufacturing apparatus (1) according to claim 1 or claim 2, wherein the second coating device (40) is configured to cause part of the second active material coating (140) to fill the holes formed in the current collector (10).

4. The electrode plate manufacturing apparatus (1) according to any one of claims 1 to 3, wherein the perforating device (30) comprises a plurality of perforating units (320, 340) arranged at intervals in a vertical direction, and the plurality of perforating units (320, 340) are configured to perforate different positions of the current collector (10).

5. The electrode plate manufacturing apparatus (1) according to claim 4, wherein the plurality of perforating units (320, 340) are staggered in the vertical direction.

6. The electrode plate manufacturing apparatus (1) according to any one of claims 1 to 5, wherein the electrode plate manufacturing apparatus (1) further comprises a supporting member (360), and the supporting member (360) is configured to support the current collector (10) when the perforating device (30) perforates the current collector (10).

7. An electrode plate manufacturing method, comprising:
causing a current collector (10) to travel along a travel path;
applying a first active material coating (120) on a first side (110) of the current collector (10) by a first coating device (20);
perforating the current collector (10) from a second side (130) of the current collector (10) by a perforating device (30), the second side (130) being opposite to the first side (110); and
applying a second active material coating (140) on the second side (130) of the current collector (10) by a second coating device (40),
wherein the perforating device (30) is located downstream of the first coating device (20) along the travel path of the current collector (10), and the second coating device (40) is located downstream of the perforating device (30) along the travel path of the current collector (10),
wherein no through holes are formed in the first active material coating (120) during perforation of the current collector (10),
**characterised in that**
the method further comprises detecting the holes formed in the current collector (10) by a detection unit (380) arranged between the perforating device (30) and the second coating device (40) along the travel path of the current collector (10).

8. The electrode plate manufacturing method according to claim 7, wherein a number of through holes (18) are formed in the current collector (10) when the current collector (10) is perforated from the second side (130) of the current collector (10).

9. The electrode plate manufacturing method according to claim 7 or claim 8, wherein when the second active material coating (140) is applied by the second coating device (40), the holes formed in the current collector (10) are filled with the second active material coating (140);
and/or
wherein the perforating device (30) comprises a plurality of perforating units (320, 340) arranged at intervals in a vertical direction, and the method further comprises perforating different positions of the current collector (10) by the plurality of perforating units (320, 340);
and/or
wherein the first coating device (20), the perforating device (30) and the second coating device (40) are operated synchronously.

## Patentansprüche

1. Elektrodenplattenfertigungsgerät (1), umfassend:
eine erste Beschichtungsvorrichtung (20), die ausgelegt ist, um eine erste Aktivmaterialbeschichtung (120) auf eine erste Seite (110) eines Stromkollektors (10) aufzubringen;
eine Perforiervorrichtung (30), die ausgelegt ist, um den Stromkollektor (10) von einer zweiten Seite (130) des Stromkollektors (10) zu perforieren, wobei die zweite Seite (130) der ersten Seite (110) gegenüber liegt; und
eine zweite Beschichtungsvorrichtung (40), die ausgelegt ist, um eine zweite Aktivmaterialbeschichtung (140) auf eine zweite Seite (130) des Stromkollektors (10) aufzubringen,
wobei die Perforiervorrichtung (30) sich nachgeordnet zu der ersten Beschichtungsvorrichtung (20) entlang eines Bewegungsweges des Stromkollektors (10) befindet, und die zweite Beschichtungsvorrichtung (40) sich nachgeordnet zu der Perforiervorrichtung (30) entlang des Bewegungsweges des Stromkollektors (10) befindet,
wobei die Perforiervorrichtung (30) ausgelegt ist, um nicht durchgehende Löcher in der ersten Aktivmaterialbeschichtung (120) zu bilden, wenn der Stromkollektor (10) perforiert wird,
**dadurch gekennzeichnet, dass**
eine Detektiereinheit (380) zwischen der Perforiervorrichtung (30) und der zweiten Beschichtungsvorrichtung (40) entlang des Bewegungsweges des Stromkollektors (10) angeordnet ist, und die Detektiereinheit (380) ausgelegt ist, um die in dem Stromkollektor (10) gebildeten Löcher zu detektieren.

2. Elektrodenplattenfertigungsgerät (1) nach Anspruch 1, wobei die Perforiervorrichtung (30) ausgelegt ist, um den Stromkollektor (10) von der zweiten Seite (130) des Stromkollektors (10) zu perforieren, so dass eine Anzahl von durchgehenden Löchern (18) in dem Stromkollektor (10) gebildet wird.

3. Elektrodenplattenfertigungsgerät (1) nach Anspruch 1 oder Anspruch 2, wobei die zweite Beschichtungsvorrichtung (40) ausgelegt ist, um zu bewirken, dass ein Teil der zweiten Aktivmaterialbeschichtung (140) die in dem Stromkollektor (10) gebildeten Löcher füllt.

4. Elektrodenplattenfertigungsgerät (1) nach einem der Ansprüche 1 bis 3, wobei die Perforiervorrichtung (30) eine Vielzahl von Perforiereinheiten (320, 340) umfasst, die in Intervallen in einer vertikalen Richtung angeordnet sind, und die Vielzahl von Perforiereinheiten (320, 340) ausgelegt ist, um unterschiedliche Positionen des Stromkollektors (10) zu perforieren.

5. Elektrodenplattenfertigungsgerät (1) nach Anspruch 4, wobei die Vielzahl von Perforiereinheiten (320, 340) in der vertikalen Richtung gestaffelt ist.

6. Elektrodenplattenfertigungsgerät (1) nach einem der Ansprüche 1 bis 5, wobei das Elektrodenplattenfertigungsgerät (1) des Weiteren ein Stützelement (360) umfasst, und das Stützelement (360) ausgelegt ist, um den Stromkollektor (10) zu stützen, wenn die Perforiervorrichtung (30) den Stromkollektor (10) perforiert.

7. Elektrodenplattenfertigungsverfahren, umfassend:
Bewirken, dass sich ein Stromkollektor (10) entlang eines Bewegungsweges bewegt;
Aufbringen einer ersten Aktivmaterialbeschichtung (120) auf eine erste Seite (110) des Stromkollektors (10) durch eine erste Beschichtungsvorrichtung (20);
Perforieren des Stromkollektors (10) von einer zweiten Seite (130) des Stromkollektors (10) durch eine Perforiervorrichtung (30), wobei die zweite Seite (130) der ersten Seite (110) gegenüber liegt; und
Aufbringen einer zweiten Aktivmaterialbeschichtung (140) auf die zweite Seite (130) des Stromkollektors (10) durch eine zweite Beschichtungsvorrichtung (40),
wobei die Perforiervorrichtung (30) sich nachgeordnet zu der ersten Beschichtungsvorrichtung (20) entlang des Bewegungsweges des Stromkollektors (10) befindet, und die zweite Beschichtungsvorrichtung (40) sich nachgeordnet zu der Perforiervorrichtung (30) entlang des Bewegungsweges des Stromkollektors (10) befindet,
wobei während der Perforation des Stromkollektors (10) keine durchgehenden Löcher in der ersten Aktivmaterialbeschichtung (120) gebildet werden,
**dadurch gekennzeichnet, dass**
das Verfahren des Weiteren Detektieren der in dem Stromkollektor (10) gebildeten Löcher durch eine Detektiereinheit (380) umfasst, die zwischen der Perforiervorrichtung (30) und der zweiten Beschichtungsvorrichtung (40) entlang des Bewegungsweges des Stromkollektors (10) angeordnet ist.

8. Elektrodenplattenfertigungsverfahren nach Anspruch 7, wobei eine Anzahl an durchgehenden Löchern (18) in dem Stromkollektor (10) gebildet wird, wenn der Stromkollektor (10) von der zweiten Seite (130) des Stromkollektors (10) perforiert wird.

9. Elektrodenplattenfertigungsverfahren nach Anspruch 7 oder Anspruch 8, wobei die in dem Stromkollektor (10) gebildeten Löcher, wenn die zweite Aktivmaterialbeschichtung (140) von der zweiten Beschichtungsvorrichtung (40) aufgebracht wird, mit der zweiten Aktivmaterialbeschichtung (140) gefüllt werden;
und/oder
wobei die Perforiervorrichtung (30) eine Vielzahl von Perforiereinheiten (320, 340) umfasst, die in Intervallen in einer vertikalen Richtung angeordnet sind, und wobei das Verfahren des Weiteren Perforieren unterschiedlicher Positionen des Stromkollektors (10) durch die Vielzahl von Perforiereinheiten (320, 340) umfasst;
und/oder
wobei die erste Beschichtungsvorrichtung (20), die Perforiervorrichtung (30) und die zweite Beschichtungsvorrichtung (40) synchron betrieben werden.

## Revendications

1. Appareil (1) de fabrication de plaques d'électrode, comprenant :
un premier dispositif de revêtement (20) conçu pour appliquer un premier revêtement de matériau actif (120) sur un premier côté (110) d'un collecteur de courant (10) ;
un dispositif de perforation (30) conçu pour perforer le collecteur de courant (10) depuis un deuxième côté (130) du collecteur de courant (10), le deuxième côté (130) se situant à l'opposé du premier côté (110) ; et
un deuxième dispositif de revêtement (40) conçu pour appliquer un deuxième revêtement de matériau actif (140) sur le deuxième côté (130) du collecteur de courant (10),
dans lequel le dispositif de perforation (30) se situe en aval du premier dispositif de revêtement (20) le long d'un chemin de déplacement du collecteur de courant (10), et le deuxième dispositif de revêtement (40) se situe en aval du dispositif de perforation (30) le long du chemin de déplacement du collecteur de courant (10),
dans lequel le dispositif de perforation (30) est conçu pour ne former aucun trou débouchant dans le premier revêtement de matériau actif (120) lors de la perforation du collecteur de courant (10),
**caractérisé en ce que**
une unité de détection (380) est disposée entre le dispositif de perforation (30) et le deuxième dispositif de revêtement (40) le long du chemin de déplacement du collecteur de courant (10), et l'unité de détection (380) est conçue pour détecter les trous formés dans le collecteur de courant (10).

2. Appareil (1) de fabrication de plaques d'électrode selon la revendication 1, dans lequel le dispositif de perforation (30) est conçu pour perforer le collecteur de courant (10) depuis le deuxième côté (130) du collecteur de courant (10) de telle sorte qu'un certain nombre de trous débouchants (18) soient formés dans le collecteur de courant (10).

3. Appareil (1) de fabrication de plaques d'électrode selon la revendication 1 ou la revendication 2, dans lequel le deuxième dispositif de revêtement (40) est conçu pour amener une partie du deuxième revêtement de matériau actif (140) à remplir les trous formés dans le collecteur de courant (10).

4. Appareil (1) de fabrication de plaques d'électrode selon l'une quelconque des revendications 1 à 3, dans lequel le dispositif de perforation (30) comprend une pluralité d'unités de perforation (320, 340) disposées à intervalles dans une direction verticale, et la pluralité d'unités de perforation (320, 340) sont conçues pour perforer différentes positions du collecteur de courant (10).

5. Appareil (1) de fabrication de plaques d'électrode selon la revendication 4, dans lequel la pluralité d'unités de perforation (320, 340) sont disposées en quinconce dans la direction verticale.

6. Appareil (1) de fabrication de plaques d'électrode selon l'une quelconque des revendications 1 à 5, l'appareil (1) de fabrication de plaques d'électrode comprenant en outre un élément de support (360), et l'élément de support (360) étant conçu pour soutenir le collecteur de courant (10) lorsque le dispositif de perforation (30) perfore le collecteur de courant (10).

7. Procédé de fabrication de plaques d'électrode, comprenant :
le déplacement d'un collecteur de courant (10) le long d'un chemin de déplacement ;
l'application d'un premier revêtement de matériau actif (120) sur un premier côté (110) du collecteur de courant (10) par un premier dispositif de revêtement (20) ;
la perforation du collecteur de courant (10) depuis un deuxième côté (130) du collecteur de courant (10) par un dispositif de perforation (30), le deuxième côté (130) se situant à l'opposé du premier côté (110) ; et
l'application d'un deuxième revêtement de matériau actif (140) sur le deuxième côté (130) du collecteur de courant (10) par un deuxième dispositif de revêtement (40),
dans lequel le dispositif de perforation (30) se situe en aval du premier dispositif de revêtement (20) le long du chemin de déplacement du collecteur de courant (10), et le deuxième dispositif de revêtement (40) se situe en aval du dispositif de perforation (30) le long du chemin de déplacement du collecteur de courant (10),
dans lequel aucun trou débouchant n'est formé dans le premier revêtement de matériau actif (120) lors de la perforation du collecteur de courant (10),
**caractérisé en ce que**
le procédé comprend en outre la détection des trous formés dans le collecteur de courant (10) par une unité de détection (380) disposée entre le dispositif de perforation (30) et le deuxième dispositif de revêtement (40) le long du chemin de déplacement du collecteur de courant (10).

8. Procédé de fabrication de plaques d'électrode selon la revendication 7, dans lequel un certain nombre de trous débouchants (18) sont formés dans le collecteur de courant (10) lorsque le collecteur de courant (10) est perforé depuis le deuxième côté (130) du collecteur de courant (10).

9. Procédé de fabrication de plaques d'électrode selon la revendication 7 ou la revendication 8 dans lequel, lorsque le deuxième revêtement de matériau actif (140) est appliqué par le deuxième dispositif de revêtement (40), les trous formés dans le collecteur de courant (10) sont remplis avec le deuxième revêtement de matériau actif (140) ;
et/ou
dans lequel le dispositif de perforation (30) comprend une pluralité d'unités de perforation (320, 340) disposées à intervalles dans une direction verticale, et le procédé comprend en outre la perforation de différentes positions du collecteur de courant (10) par la pluralité d'unités de perforation (320, 340) ;
et/ou
dans lequel on fait fonctionner le premier dispositif de revêtement (20), le dispositif de perforation (30) et le deuxième dispositif de revêtement (40) de façon synchrone.
